# EUROPEAN PATENT APPLICATION

(11) **EP 3 611 683 A1**
(43) Date of publication of application: **19.02.2020**
(21) Application number: 19190028.1
(22) Date of filing: 05.08.2019
(51) Int. Cl.: G06Q 20/20, G07G 1/00, G07G 1/14

(54) **CHECKOUT SYSTEM**

(30) Priority: 17.08.2018 JP 2018153678
(71) Applicant: Toshiba Tec Kabushiki Kaisha, 141-8562 Tokyo (JP)
(72) Inventor: NAITO, Hidehiro, Shinagawa-ku, Tokyo 141-8562 (JP); IIZAKA, Hitoshi, Shinagawa-ku, Tokyo 141-8562 (JP); MIYAKOSHI, Hidehiko, Shinagawa-ku, Tokyo 141-8562 (JP); KAWAGUCHI, Yuki, Shinagawa-ku, Tokyo 141-8562 (JP); OGOMORI, Naoki, Shinagawa-ku, Tokyo 141-8562 (JP)
(74) Representative: Bandpay & Greuter

(57) **Abstract**

A registration apparatus comprises a first control module configured to switch an operation mode from a store clerk operation mode in which registration processing of a purchased commodity is performed by an operation of a store clerk to a customer operation mode in which the registration processing is performed by an operation of a customer, and vice versa. A settlement apparatus comprises a second control module configured to switch an operation mode from a store clerk operation mode in which settlement processing is performed by an operation of the store clerk to a customer operation mode in which the settlement processing is performed by an operation of the customer, and vice versa. The first and second control modules switch the operation mode from the store clerk operation mode to the customer operation mode if a sign-off is performed, and vice versa if a sign-on is performed.

## Description

### FIELD

Embodiments described herein relate generally to a checkout system and a checkout method.

### BACKGROUND

In a retail store such as a supermarket, a checkout system is introduced in which a registration apparatus for performing a registration processing on a commodity and a settlement apparatus for performing a settlement processing on the commodity are separately arranged. In such a checkout system, a store clerk inputs identification information for identifying the store clerk, i.e., so-called sign-on operation, to enable the registration apparatus and the settlement apparatus to be operated when the operation begins. Then, the store clerk operates the registration apparatus and the settlement apparatus that he/she signs in to perform registration and settlement on a commodity that a customer purchases. Recently, in such a retail store, a semi-self-service system, i.e., one of the checkout systems, is used. In the semi-self-service system, the registration apparatus is operated by the store clerk and the settlement apparatus is operated by the customer.

Incidentally, in the retail store, there is a case in which the store clerk leaves the registration apparatus or the settlement apparatus for various reasons. In this case, the store clerk performs a sign-off operation for deleting the identification information input to the registration apparatus or the settlement apparatus to suspend the corresponding apparatus. Therefore, the apparatus at which no store clerk is present cannot be used. Thus, if an apparatus that cannot be operated due to absence of the store clerk exists among the apparatuses included in the checkout system, there is a possibility of reducing the efficiency (checkout efficiency) of the entire system.

In a conventional system, conforming to the type of an external auxiliary apparatus connected to the apparatus described above, a sales processing apparatus including a face-to-face mode in which the store clerk operates the apparatus and a self-service mode in which the customer operates the apparatus is also known. However, according to a conventional technology to which the above-described checkout system belongs, it is difficult to promptly respond to leave/return of the store clerk.

### SUMMARY OF INVENTION

To solve such problem, there is provided a checkout system comprising at least one registration apparatus and at least one settlement apparatus connected to a respective registration apparatus, wherein each registration apparatus comprising a registration module configured to execute a registration processing for registering a purchased commodity, and a first control module configured to switch an operation mode of the registration apparatus from a store clerk operation mode in which the registration processing is performed by a store clerk to a customer operation mode in which the registration processing is performed by a customer, and vice versa, and each settlement apparatus comprising a settlement module configured to execute a settlement processing on the purchased commodity registered through the registration processing by the registration apparatus, and a second control module configured to switch an operation mode of the settlement apparatus from a store clerk operation mode in which the settlement processing is performed by the store clerk to a customer operation mode in which the settlement processing is performed by the customer, and vice versa, wherein the first control module and the second control module switch the operation mode from the store clerk operation mode to the customer operation mode if a sign-off operation of the store clerk is performed, and switch the operation mode from the customer operation mode to the store clerk operation mode if a sign-on operation of the store clerk is performed.

Preferably, the first control module and the second control module are configured to provide a simpler operation method in the customer operation mode as compared with an operation method in the store clerk operation mode.

Preferably still, the registration apparatus further comprises a generation module configured to generate settlement data based on details of the purchased commodity registered by the registration module and a transmission module configured to transmit the settlement data generated by the generation module to the at least one of the settlement apparatuses serving as a transmission destination, the first control module designates one of the at least one settlement apparatuses selected by the store clerk in the store clerk operation mode as the transmission destination, and designates one of the at least one settlement apparatuses in the customer operation mode as the transmission destination, and the transmission module transmits the settlement data to the settlement apparatus designated as the transmission destination by the first control module.

Preferably yet, the registration apparatus further comprises a generation module configured to generate settlement data based on details of the purchased commodity registered by the registration module and a transmission module configured to transmit the settlement data generated by the generation module to one of the at least one settlement apparatuses serving as a transmission destination, the first control module designates one of the at least one settlement apparatuses selected by the store clerk in the store clerk operation mode as the transmission destination, and designates one of the at least one settlement apparatuses in the customer operation mode as the transmission destination, and the transmission module transmits the settlement data to the settlement apparatus designated as the transmission destination by the first control module.

Suitably, the first control module designates one settlement apparatus operating in the store clerk operation mode selected by the store clerk if a settlement method requiring an operation or assistance performed by the store clerk is designated in the store clerk operation mode.

Suitably still, the first control module designates one of the settlement apparatuses operating in the store clerk operation mode if the settlement method requiring an operation or assistance performed by the store clerk is designated in the customer operation mode.

Suitably yet, the checkout system comprises at least two registration apparatuses and at least two settlement apparatuses, each settlement apparatus connected to a respective registration apparatus.

Typically, the checkout system comprises at least three registration apparatuses and at least three settlement apparatuses, each settlement apparatus connected to a respective registration apparatus.

Typically still, the system comprises a same number of registration apparatuses as settlement apparatuses.

Typically yet, the checkout system further comprises a printer configured to print a receipt upon completion of settlement processing.

The invention also relates to a checkout method for a checkout system comprising at least one registration apparatus and at least one settlement apparatus connected to a respective registration apparatus, the method comprising: executing a registration processing for registering a purchased commodity; switching an operation mode of the registration apparatus from a store clerk operation mode in which the registration processing is performed by a store clerk to a customer operation mode in which the registration processing is performed by a customer, and optionally vice versa; executing a settlement processing on the purchased commodity registered through the registration processing by the registration apparatus; switching an operation mode of the settlement apparatus from a store clerk operation mode in which the settlement processing is performed by the store clerk to a customer operation mode in which the settlement processing is performed by the customer, and optionally vice versa, wherein switching the operation mode from the store clerk operation mode to the customer operation mode is executed when a sign-off operation of the store clerk is performed, and switching the operation mode from the customer operation mode to the store clerk operation mode is executed when a sign-on operation of the store clerk is performed.

Preferably, registration processing and settlement processing are a simpler operation method in the customer operation mode as compared with an operation method in the store clerk operation mode.

Preferably still, the checkout method further comprises: generating settlement data based on details of the purchased commodity registered and transmitting the settlement data generated to the at least one of the settlement apparatuses serving as a transmission destination, designating one of the at least one settlement apparatuses selected by the store clerk in the store clerk operation mode as the transmission destination, designating one of the at least one settlement apparatuses in the customer operation mode as the transmission destination, and transmitting the settlement data to the settlement apparatus designated as the transmission destination.

Preferably yet, the checkout method further comprises: generating settlement data based on details of the purchased commodity registered and transmitting the settlement data generated to one of the at least one settlement apparatuses serving as a transmission destination, designating one of the at least one settlement apparatuses selected by the store clerk in the store clerk operation mode as the transmission destination, designating one of the at least one settlement apparatuses in the customer operation mode as the transmission destination, and transmitting the settlement data to the settlement apparatus designated as the transmission destination.

Suitably, the checkout method further comprises: designating one settlement apparatus operating in the store clerk operation mode selected by the store clerk if a settlement method requiring an operation or assistance performed by the store clerk is designated in the store clerk operation mode.

Suitably still, the checkout method further comprises: designating one of the settlement apparatuses operating in the store clerk operation mode if the settlement method requiring an operation or assistance performed by the store clerk is designated in the customer operation mode.

Suitably yet, the checkout method comprises using at least two registration apparatuses and at least two settlement apparatuses, each settlement apparatus connected to a respective registration apparatus.

Typically, in the checkout method, the system comprises a same number of registration apparatuses as settlement apparatuses.

Typically still, the checkout method further comprises: printing a receipt upon completion of settlement processing.

The invention also concerns a checkout system comprising: a printer for printing a receipt; a plurality of registration apparatuses; and a plurality of settlement apparatuses, each connected to a respective registration apparatus, wherein each registration apparatus comprises a registration module configured to execute a registration processing for registering a purchased commodity, and a first control module configured to switch an operation mode of the registration apparatus from a store clerk operation mode in which the registration processing is performed by a store clerk to a customer operation mode in which the registration processing is performed by a customer, and vice versa, and each settlement apparatus comprises a settlement module configured to execute a settlement processing on the purchased commodity registered through the registration processing by the registration apparatus, and a second control module configured to switch an operation mode of the settlement apparatus from a store clerk operation mode in which the settlement processing is performed by the store clerk to a customer operation mode in which the settlement processing is performed by the customer, and vice versa, wherein the first control module and the second control module of a given registration apparatus - settlement apparatus couple switch the operation mode from the store clerk operation mode to the customer operation mode if a sign-off operation of the store clerk is performed, and switch the operation mode from the customer operation mode to the store clerk operation mode if a sign-on operation of the store clerk is performed.

The invention further relates to a non-transitory computer readable medium storing a program causing a computer to execute the method described above.

### DESCRIPTION OF THE DRAWINGS

The above and other objects, features and advantages of the present invention will be made apparent from the following description of the preferred embodiments, given as non-limiting examples, with reference to the accompanying drawings, in which:
Fig. 1 is a diagram illustrating a configuration of a checkout system according to an embodiment;
Fig. 2 is a diagram illustrating a layout of a registration apparatus and a settlement apparatus according to the embodiment;
Fig. 3 is a perspective view illustrating an external appearance of the registration apparatus;
Fig. 4 is a perspective view illustrating an external appearance of the settlement apparatus;
Fig. 5 is a diagram illustrating hardware configurations of the registration apparatus and the settlement apparatus;
Fig. 6 is a diagram illustrating functional components of the registration apparatus;
Fig. 7 is a diagram illustrating functional components of the settlement apparatus;
Fig. 8 is a flowchart depicting a processing executed by the registration apparatus; and
Fig. 9 is a flowchart depicting a processing executed by the settlement apparatus.

### DETAILED DESCRIPTION

In accordance with an embodiment, a checkout system comprises one or a plurality of registration apparatuses and one or a plurality of settlement apparatuses connected to the respective registration apparatuses in a communicable manner. The registration apparatus comprises a registration module configured to execute a registration processing for registering a purchased commodity; and a first control module configured to switch an operation mode of the registration apparatus from a store clerk operation mode in which the registration processing is performed by an operation of a store clerk to a customer operation mode in which the registration processing is performed by an operation of a customer, and vice versa. The settlement apparatus comprises a settlement module configured to execute a settlement processing on the commodity registered through the registration processing by the registration apparatus; and a second control module configured to switch an operation mode of the settlement apparatus from a store clerk operation mode in which the settlement processing is performed by an operation of the store clerk to a customer operation mode in which the settlement processing is performed by an operation of the customer, and vice versa. The first control module and the second control module switch the operation mode from the store clerk operation mode to the customer operation mode if a sign-off operation of the store clerk is performed, and switch the operation mode from the customer operation mode to the store clerk operation mode if a sign-on operation of the store clerk is performed.

A checkout system according to the embodiment is described below with reference to the accompanying drawings. The embodiment described below is applied to a checkout system introduced in a retail store such as a supermarket, but the present invention is not limited thereto.

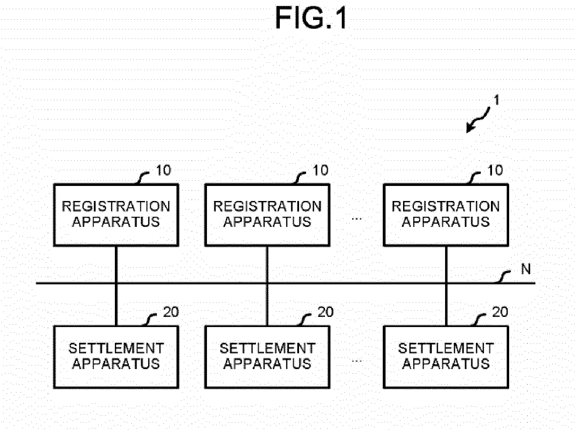

Fig. 1 is a diagram illustrating a checkout system 1 according to the present embodiment. As shown in Fig. 1, the checkout system 1 includes a registration apparatus 10 and a settlement apparatus 20. The registration apparatus 10 and the settlement apparatus 20 are connected to each other via a network N such as a LAN (Local Area Network). The number of registration apparatuses 10 and the number of settlement apparatuses 20 connected to the network N are not particularly limited.

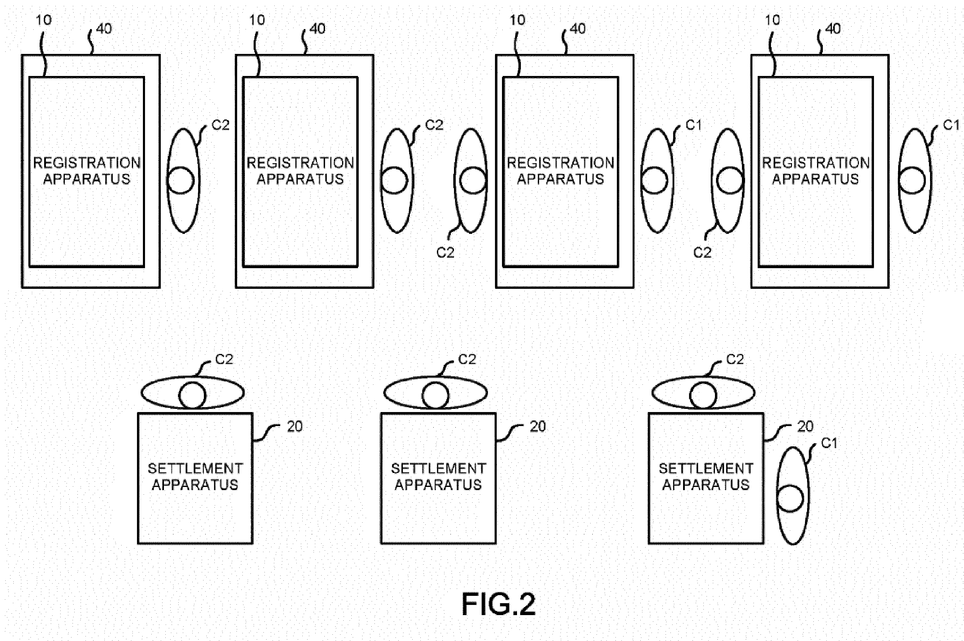

The registration apparatus 10 and the settlement apparatus 20 are provided in a predetermined area in a retail store, for example, in the vicinity of an exit of the retail store. Fig. 2 is a diagram illustrating a layout of the registration apparatus 10 and the settlement apparatus 20. As shown in Fig. 2, the registration apparatus 10 and the settlement apparatus 20 are separately arranged in the predetermined area in the retail store. The registration apparatus 10 is installed, for example, on a work table 40. The registration apparatus 10 according to the present embodiment is operated by a store clerk (checker) C1 or a customer C2 to execute a registration processing on a commodity that the customer C2 purchases in response to the operation.

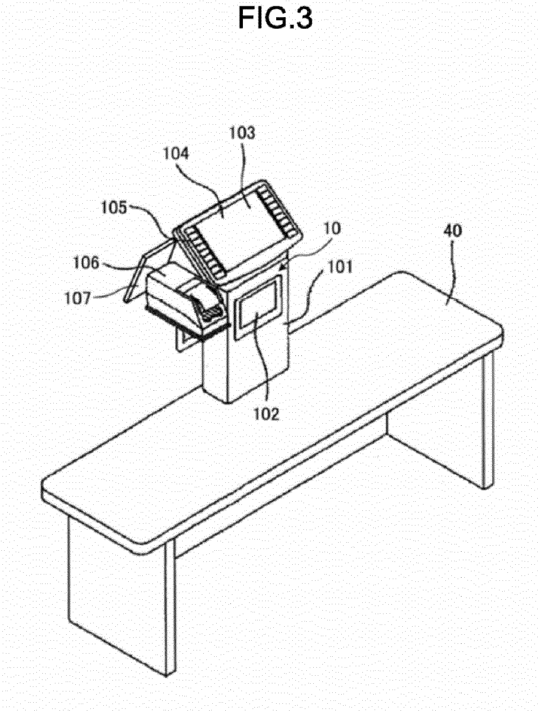

In the layout shown in Fig. 2, the customer C2 puts a purchased commodity in a basket and brings it to the work table 40. The store clerk C1 or the customer C2 scans each commodity, using a scanner 101 (refer to Fig. 3) provided in the registration apparatus 10 to input commodity identification information capable of identifying the commodity to the registration apparatus 10. The registration apparatus 10 performs the registration processing on the commodity that the customer C2 purchases based on the commodity identification information. If an operator who operates the registration apparatus 10 is the store clerk C1, the store clerk C1 operates the registration apparatus 10 while facing the customer C2 across the work table 40.

When the registration of the commodity for one transaction is completed in the registration apparatus 10, termination of the registration is declared by operating a touch panel 103 or a keyboard 105 (refer to Fig. 3). Then, the customer C2 puts the commodity already registered in the basket and brings it to one of the settlement apparatuses 20, and operates the settlement apparatus 20 to perform settlement on the commodity.

Fig. 3 is a perspective view illustrating an external appearance of the registration apparatus 10. Fig. 3 shows the registration apparatus 10 as viewed from an operator side of the registration apparatus 10. As shown in Fig. 3, the registration apparatus 10 arranged on the work table 40 is constituted with the vertical scanner 101 having a reading window 102 as a main device. In the scanner 101, an image capturing section (not shown) is arranged on a rear side of the reading window 102.

The registration apparatus 10 includes the keyboard 105 and a display 104 with the touch panel 103 on the top of the scanner 101. The display 104 displays a commodity name, price, etc. of the commodity photographed by the image capturing section of the scanner 101. The touch panel 103 and the keyboard 105 are used by the operator to perform operation input.

On the left side of the registration apparatus 10, a printer 106 is arranged. The printer 106 includes, for example, a thermal transfer print head that performs printing on a predetermined paper (receipt paper). For example, in a case in which the registration apparatus 10 is used as a POS (Point of Sale) terminal, i.e., the registration apparatus 10 performs a registration processing and a settlement processing on a commodity, the printer 106 prints contents of registration and settlement of the commodity in one transaction on the receipt paper. On the left side of the registration apparatus 10, a display for customer 107 which is used for the customer C2 at the time the store clerk C1 operates the registration apparatus 10 is arranged.

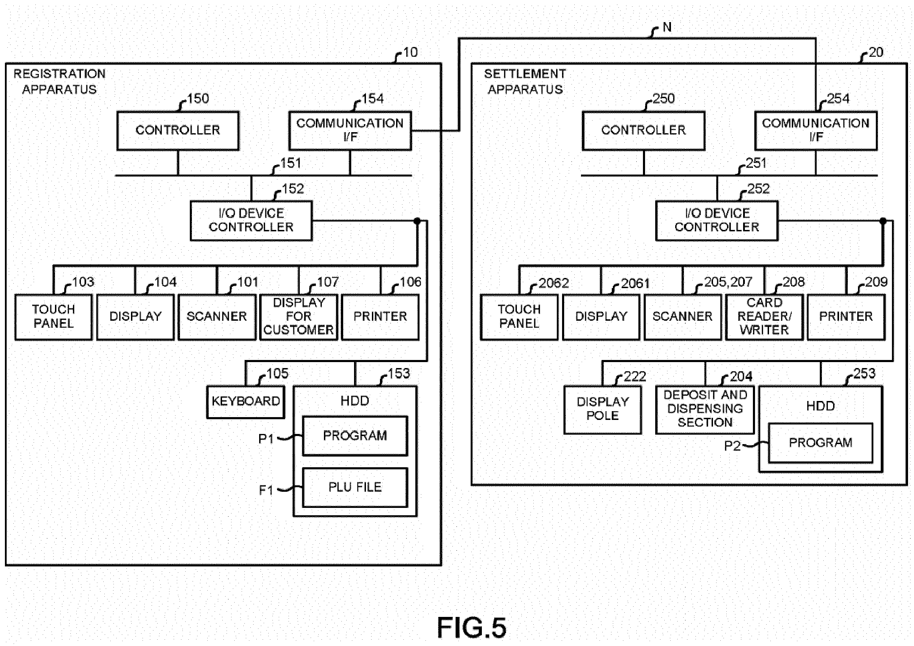

The registration apparatus 10 specifies a commodity contained in an image captured by the image capturing section by scanning a code symbol such as a barcode or QR code® attached to the commodity or by general object recognition. Specifically, the registration apparatus 10 refers to a PLU file F1 (refer to Fig. 5), in which a commodity code for identifying the commodity is stored in association with a commodity name, a unit price, weight, etc. of the commodity to specify the commodity identified by the commodity code contained in the scanned code symbol.

The registration apparatus 10 displays a screen for confirming the specified commodity and receiving input of a quantity of the commodity on the display 104. Then, the registration apparatus 10 registers the specified commodity. In the registration processing, the commodity information of the commodity read from the PLU file F1 is stored in a RAM in association with the quantity of the purchased commodity.

On the other hand, the settlement apparatus 20 executes a settlement processing on the commodity based on sales data registered in the registration apparatus 10. The settlement apparatus 20 of the present embodiment is operated by the store clerk C1 or the customer C2 to perform the settlement processing on the commodity purchased by the customer C2.

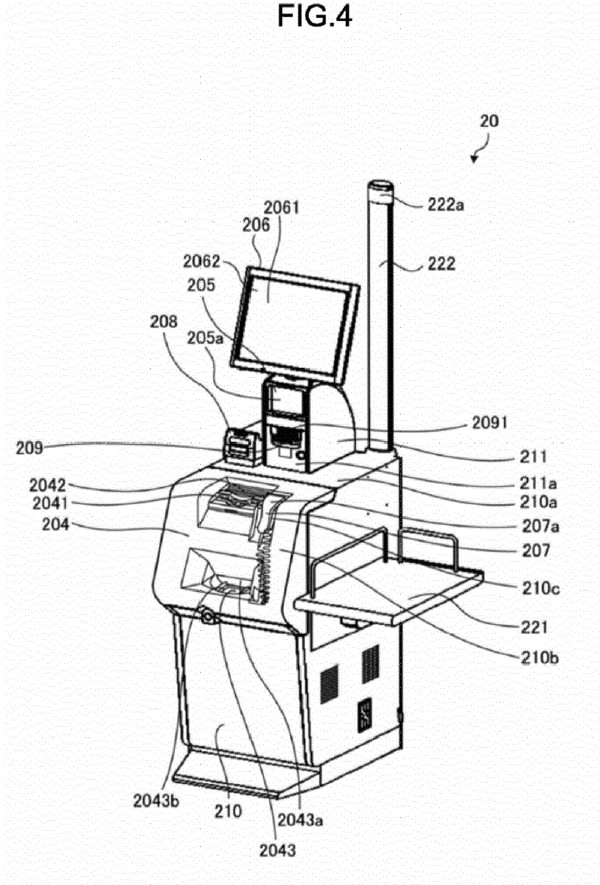

Fig. 4 is a perspective view illustrating the external appearance of the settlement apparatus 20. The settlement apparatus 20 includes a deposit/dispensing section 204, a fixed scanner 205, a display-operation panel 206, a hand-held scanner 207, a card reader/writer 208, a printer 209, a first housing 210 and a second housing 211. The first housing 210 has a substantially box shape, and a controller 250, the deposit/dispensing section 204 (refer to Fig. 5) are built in the first housing 210. The second housing 211 is an outer shell of the fixed scanner 205 and the printer 209, and is mounted on an upper surface 210a of the first housing 210.

The fixed scanner 205 has an image capturing window 205a provided at the upper portion of the second housing 211, and the image capturing section (not shown) built in the second housing 211. The image capturing section captures, for example, a code symbol such as a barcode held in front of the image capturing window 205a to read out code information included in the code symbol. The image capturing section captures an image of, for example, a gift certificate or a coupon held in front of the image capturing window 205a, and outputs the captured image to the controller 250.

The display-operation panel 206 includes a display 2061 and a touch panel 2062, and is mounted on the second housing 211. The display 2061 displays an image under the control of the controller 250. The touch panel 2062 is provided on a display surface of the display 2061 in a laminating manner, and outputs information based on a touched position thereon to the controller 250.

The hand-held scanner 207 is arranged at the upper portion of a front surface 210b of the first housing 210. At the upper right portion of the front surface 210b of the first housing 210, a holding section 210c for holding a front end 207a of the hand-held scanner 207 in a hang-up state is arranged.

The card reader/writer 208 is arranged next to the second housing 211 on an upper surface 210a of the first housing 210. The card reader/writer 208 reads and writes information from and to a card medium. In the settlement apparatus 20, a card medium such as a credit card is inserted in the card reader/writer 208, and then an electronic payment can be performed based on information held in the card medium.

The printer 209 has a printing section (not shown) built in the second housing 211 and a receipt issuing port 2091 arranged on a front surface 211a of the second housing 211. The printer 209 issues a receipt printed by the printing section from the receipt issuing port 2091.

The deposit/dispensing section 204 includes a money insertion slot 2041, a bill dispensing port 2042, and a coin dispensing section 2043. The coin dispensing section 2043 includes a dispensing port 2043a and a tray 2043b. The deposit/dispensing section 204 receives bills and coins inserted through the money insertion slot 2041, and separately stores them by denomination. Then, in response to a request from the controller 250, the deposit/dispensing section 204 dispenses a change from the dispensing port 2043a. The dispensed change is received by the tray 2043b.

The settlement apparatus 20 includes a basket holding table 221 on one side of the first housing 210. The basket holding table 221 is a table on which a basket containing the commodity after the registration is executed is placed.

Furthermore, the settlement apparatus 20 has a display pole 222 extending upward from the upper surface 210a of the first housing 210 to display a current state of the settlement apparatus 20. The display pole 222 has a lighting unit 222a that selectively emits, for example, blue and red lights at a tip thereof.

Next, the hardware configurations of the registration apparatus 10 and the settlement apparatus 20 are described. Fig. 5 is a diagram illustrating hardware configurations of the registration apparatus 10 and the settlement apparatus 20.

As shown in Fig. 5, the registration apparatus 10 includes the controller 150 having a computer configuration including a CPU (Central Processing Unit), and a ROM (Read Only Memory) and a RAM (Random Access Memory) serving as storage media. The ROM stores various programs to be executed by the CPU and various kinds of data. The RAM temporarily stores data and programs when the CPU executes various programs. The controller 150 is connected to an HDD (Hard Disk Drive) 153, a communication I/F (interface) 154 and the like in addition to the scanner 101, the touch panel 103, the display 104, the keyboard 105, the printer 106 and the display for customer 107 described above via a bus line 151 and an I/O (input/output) device controller 152.

The controller 150 collectively controls the respective sections of the registration apparatus 10. For example, the controller 150 outputs information to be displayed on the display 104 or the display for customer 107, and receives information of an operation performed by the operator from the touch panel 103.

The HDD 153 stores a program P1 executable by the controller 150 (CPU) and various kinds of setting information. The HDD 153 also stores the PLU file F1. The PLU file F1 stores commodity information including a commodity code uniquely assigned and information relating to the commodity such as a commodity name, unit price, a category, weight, etc. of the commodity in an associated manner, for each commodity sold in the retail store. In a case in which the commodity is specified by the general object recognition, the PLU file F1 stores feature amount indicating appearance features of the commodity such as a hue and unevenness of a surface read from a commodity image in association with the commodity information described above.

The communication I/F 154 is connected to the network N. The controller 150 communicates with an external device such as the settlement apparatus 20 via the communication I/F 154.

As shown in Fig. 5, the settlement apparatus 20 includes the controller 250 having a computer configuration including a CPU, and a ROM and a RAM serving as storage media. The ROM stores various programs to be executed by the CPU and various kinds of data. The RAM temporarily stores data and programs when the CPU executes various programs.

The controller 250 is connected to an HDD 253 and a communication I/F 254 in addition to the display 2061, the touch panel 2062, the fixed scanner 205, the hand-held scanner 207, the card reader/writer 208, the printer 209, the deposit/dispensing section 204 and the display pole 222 via a bus line 251 and an I/O device controller 252.

The controller 250 collectively controls the respective sections of the settlement apparatus 20. For example, the controller 250 outputs information to be displayed on the display 2061 of the display-operation panel 206, and receives information of an operation performed by the operator from the touch panel 2062. The controller 250 grasps a deposit amount to the deposit/dispensing section 204 and outputs a dispensing instruction to the deposit/dispensing section 204.

The HDD 253 stores a program P2 executable by the controller 250 (CPU) and various kinds of setting information. The HDD 253 may store the PLU file F1 described above. The communication I/F 254 is connected to the network N. The controller 250 communicates with an external device such as the registration apparatus 10 via the communication I/F 254.

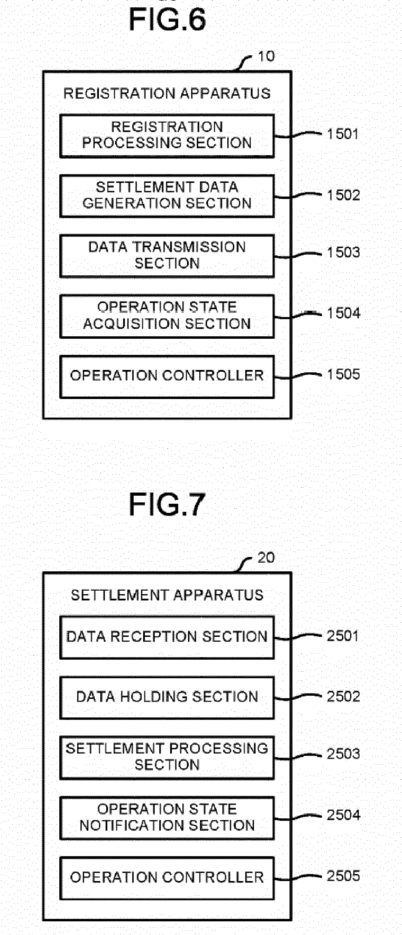

Next, the functional components of the registration apparatus 10 are described with reference to Fig. 6. Fig. 6 is a diagram illustrating functional components of the registration apparatus 10.

As shown in Fig. 6, the registration apparatus 10 includes a registration processing section 1501, a settlement data generation section 1502, a data transmission section 1503, an operation state acquisition section 1504 and an operation controller 1505 as functional components. These functional components each may be a software configuration realized through the cooperation of the controller 150 and the program P1, or may be a hardware configuration realized by a processor such as a CPU or a dedicated circuit.

The registration processing section 1501 is an example of a registration module. The registration processing section 1501 executes a registration processing for registering a commodity purchased by the customer C2 as a commodity in one transaction. Specifically, the registration processing section 1501 acquires the commodity code or the commodity image input from the scanner 101 as the commodity identification information, and specifies the commodity identified by the acquired commodity identification information from the PLU file F1. For example, when the commodity code is input from the scanner 101, the registration processing section 1501 refers to the PLU file F1 to specify the commodity identified by the commodity code. The registration processing section 1501 specifies the commodity by the general object recognition for recognizing an object contained in the image if a commodity image is input from the scanner 101.

The registration processing section 1501 acquires, from the PLU file F1, the commodity information such as the commodity code, the commodity name, the unit price, the category, etc. of the specified commodity. The registration processing section 1501 registers the commodity by storing the acquired commodity information and a quantity (purchase quantity) of the commodity separately input as associated sales data in a storage area such as the RAM or the HDD 153.

The settlement data generation section 1502 is an example of a generation module. The settlement data generation section 1502 generates settlement data to be used in a settlement processing by the settlement apparatus 20 based on the sales data registered in one transaction. Specifically, if termination of the registration of the commodity in one transaction is declared via the touch panel 103 or the keyboard 105, the settlement data generation section 1502 generates the settlement data based on the sales data registered before the termination instruction is input.

The settlement data includes the commodity code, the commodity name, the unit price and the purchase quantity of the commodity purchased by the customer C2, and a commodity total amount calculated by totalizing amount of the commodities. Specifically, the settlement data generation section 1502 calculates a settlement amount of the commodity by multiplying the unit price of the commodity included in the sales data by the purchase quantity. The settlement data generation section 1502 calculates a total amount of all the commodities registered in one transaction (hereinafter, referred to as "commodity total amount") by totalizing the settlement amount calculated for each sales data. Then, the settlement data generation section 1502 generates settlement data including the calculated commodity total amount. If a settlement method such as a later-described special settlement is instructed via the touch panel 103 or the keyboard 105, the settlement data generation section 1502 generates settlement data including information indicating the settlement method, e.g., special settlement.

The data transmission section 1503 is an example of a transmission module. The data transmission section 1503 transmits the settlement data generated by the settlement data generation section 1502 to one of the settlement apparatuses 20. The one of the settlement apparatuses 20, i.e., a transmission destination of the settlement data, is selected (decided) by the operation controller 1505.

The operation state acquisition section 1504 acquires an operation state of the settlement apparatus 20 from each of the settlement apparatuses 20. Specifically, the operation state acquisition section 1504 acquires state information indicating whether or not the settlement apparatus 20 is executing the settlement processing from each of the settlement apparatuses 20. The operation state acquisition section 1504 also acquires state information indicating whether the settlement apparatus 20 is operating in a store clerk settlement mode described below or in a customer settlement mode from each of the settlement apparatuses 20. The timing at which the operation state acquisition section 1504 acquires the operation state is not particularly limited. For example, the operation state acquisition section 1504 may acquire the state information provided from each of the settlement apparatuses 20 at any time. The operation state acquisition section 1504 may acquire the state information from each of the settlement apparatuses 20 by requesting the state information to each of the settlement apparatuses 20 at a timing at which the termination of the registration of the commodity in one transaction is instructed.

The operation controller 1505 is an example of a first control module. The operation controller 1505 selectively switches the operation mode of the registration apparatus 10 to enable the registration apparatus 10 to operate in the switched operation mode. Specifically, the operation controller 1505 switches the operation mode of the registration apparatus 10 between a store clerk registration mode (store clerk operation mode) and a customer registration mode (customer operation mode). The store clerk registration mode is an operation mode in which the registration processing for the commodity is performed in response to the operation by the store clerk C1. An operation method customized for operation by the store clerk C1 is set in association with the store clerk registration mode. The customer registration mode is an operation mode in which the registration processing for the commodity is performed in response to the operation by the customer C2. An operation method customized for the operation by the customer C2 is set in association with the customer registration mode.

The operation controller 1505 switches the operation mode from the store clerk registration mode to the customer registration mode at the time of receiving a sign-off operation indicating that the store clerk C1 finishes or stops the operation of the registration apparatus 10. The operation controller 1505 switches the operation mode from the customer registration mode to the store clerk registration mode at the time of receiving a sign-on operation indicating that the store clerk C1 begins or resumes the operation of the registration apparatus 10. The sign-on operation is an operation for inputting identification information (such as a store clerk ID) for identifying the store clerk C1 who begins the operation, and the sign-off operation is an operation for canceling the input identification information. The operation method for the sign-off operation or the sign-on operation is not particularly limited. For example, the operation controller 1505 may determine that the sign-off operation is performed if a sign-off button displayed on the display 104 is operated through the touch panel 103 or the keyboard 105. The operation controller 1505 may determine that the sign-on operation is performed if the identification information previously assigned to the store clerk C1 is input through the touch panel 103, the keyboard 105 or the scanner 101.

In both the store clerk registration mode and the customer registration mode described above, the registration processing can be executed. However, the store clerk C1 and the customer C2 are completely different in the level of proficiency in the operation on the registration apparatus 10 and a position or a role in the retail store. Therefore, an operation and a function between the store clerk registration mode and the customer registration mode are different in terms of operability and security. The difference between the store clerk registration mode and the customer registration mode is described below.

First, the operation method is different between the store clerk registration mode and the customer registration mode. Specifically, the operation controller 1505 controls the display 104 to display an operation screen that can be operated more easily in the customer registration mode than that displayed in the store clerk registration mode. For example, the operation controller 1505 may display an operation screen with a simplified screen configuration or an operation screen with enlarged operation buttons on the display 104 in the customer registration mode, compared with the store clerk registration mode. The operation controller 1505 may display an operation screen including guide information for guiding an operation method on the display 104 in the customer registration mode. The operation controller 1505 may display an operation screen including an operation button capable of designating a special settlement described below on the display 104 as the settlement method in the customer registration mode. The operation controller 1505 may display an operation screen including a call button for calling the store clerk C1 on the display 104 in the customer registration mode. Thus, even when the customer C2 operates the registration apparatus 10, the registration apparatus 10 can be easily operated, and thus efficiency of the registration processing operated by the customer C2 can be improved.

The operation controller 1505 may not display an operation screen other than the operation screen relating to the registration processing in the customer registration mode from the viewpoint of security. Since the display for customer 107 is not used in the customer registration mode, the operation controller 1505 may control the display for customer 107 to be disabled or may control the display for customer 107 to display a message indicating that the registration apparatus 10 is operating in the customer registration mode.

On the other hand, in the store clerk registration mode, the operation controller 1505 controls the display 104 to display an operation screen capable of performing high-level operations, compared with the customer registration mode. In the store clerk registration mode, the operation controller 1505 displays an operation screen including an operation button (sign-off button) for performing a sign-off operation on the display 104. In the store clerk registration mode, the operation controller 1505 may control the display 104 to display an operation screen relating to a processing other than registration processing. For example, the operation controller 1505 displays a setting change screen for changing a setting of the registration apparatus 10 on the display 104.

A method of selecting the settlement apparatus 20 which actually executes settlement processing is different between the store clerk registration mode and the customer registration mode. Specifically, in the customer registration mode, the operation controller 1505 automatically selects one of the settlement apparatuses 20 as a settlement processing execution apparatus. More specifically, based on the state information acquired by the operation state acquisition section 1504, the operation controller 1505 selects one settlement apparatus 20 from the settlement apparatuses 20 that are not executing the settlement processing. Then, the operation controller 1505 controls the display 104 to display a screen for indicating the selected settlement apparatus 20.

On the other hand, in the store clerk registration mode, the operation controller 1505 enables the store clerk C1 to select one of the settlement apparatuses 20 serving as the settlement processing execution apparatus. More specifically, the operation controller 1505 controls the display 104 to display an operation screen (selection screen) for selecting one settlement apparatus 20 from the settlement apparatuses 20 connected to the registration apparatus 10. Then, if an operation of selecting one of the settlement apparatuses 20 is received via the selection screen, the operation controller 1505 sets the selected settlement apparatus 20 as the settlement processing execution apparatus. Then, the operation controller 1505 controls the display for customer 107 to display a screen for indicating the selected settlement apparatus 20. The operation controller 1505 may control the display 104 to display information indicating the selected settlement apparatus 20 to enable the store clerk C1 to guide the settlement apparatus 20 serving as the settlement processing execution apparatus to the customer C2.

The operation controller 1505 may display the above-described selection screen including state information indicating whether or not the settlement apparatus 20 is executing the settlement processing and the operation mode of the settlement apparatus 20 based on the state information acquired by the operation state acquisition section 1504. Thus, by displaying the state of the settlement apparatus 20, a determination index can be provided to the store clerk C1 when selecting the settlement processing execution apparatus. For example, the store clerk C1 can easily select the settlement apparatus 20 which is not executing the settlement processing by referring to the state information. In the case of a settlement method requiring the store clerk C1 to perform the settlement, such as payment for the commodity with the gift certificate or the coupon, the store clerk C1 can easily select the settlement apparatus 20 operating in the store clerk registration mode.

The difference between the store clerk registration mode and the customer registration mode is not limited to the above examples. For example, if a weighing device for measuring weight of the commodity purchased by the customer C2 is provided on the work table 40 on which the basket containing the commodity is placed, execution and non-execution of a weight check with the weighing device may be selected according to the operation mode. Specifically, the operation controller 1505 controls the registration processing section 1501 to execute the weight check of the commodity in the customer registration mode, and controls the registration processing section 1501 to omit the weight check in the store clerk registration mode.

In a case in which execution of the weight check is selected or the operation mode is the customer registration mode, the registration processing section 1501 reads weight of the commodity identified by the commodity code scanned by the scanner 101 from the PLU file F1 under the control of the operation controller 1505. Then, the registration processing section 1501 executes the weight check in which whether or not a total weight of the commodities read out until the termination of the registration of the commodity is instructed is identical to the weight measured by the weighing device on the work table 40 before the scanning is determined. In the weight check, the weight of the basket is excluded in advance.

If the registration processing section 1501 determines that the both are not identical to each other, i.e., an error in the weight check is detected, a message for confirming the presence of a commodity that is not scanned yet is displayed on the display 104. The registration processing section 1501 notifies that a weight check error is detected to another registration apparatus 10 or the settlement apparatus 20 operated by the store clerk C1, or an attendant terminal (not shown).

Thus, the operation controller 1505 controls the registration processing section 1501 to execute the registration processing with higher security in the customer registration mode in which the weight check is automatically executed, compared with the store clerk registration mode. In this way, unfair acts in which a commodity not registered yet is brought to the settlement apparatus can be prevented. A method of the weight check is not limited to the above example. For example, a weighing device is provided at a position of the work table 40 at which a basket containing commodities already scanned is placed, and the weight check between the total weight of commodities scanned until the termination of the registration of the commodity is instructed and the weight measured by the weighing device on the work table 40 after scanning may be performed.

Next, the functional components of the settlement apparatus 20 are described with reference to Fig. 7. Fig. 7 is a diagram illustrating functional components of the settlement apparatus 20.

As shown in Fig. 7, the settlement apparatus 20 includes a data reception section 2501, a data holding section 2502, a settlement processing section 2503, an operation state notification section 2504 and an operation controller 2505 as functional components. These functional components may have a software configuration realized through the cooperation of the controller 250 and the program P2, or may have a hardware configuration realized by a processor such as a CPU or a dedicated circuit.

The data reception section 2501 cooperates with the communication I/F 254 to receive the settlement data transmitted from the registration apparatus 10. The data holding section 2502 stores (holds) the settlement data received by the data reception section 2501 in a storage area such as a RAM or the HDD 253. The amount of settlement data that can be held by the storage area is not limited to one, and a plurality of settlement data may be stored. When a plurality of settlement data is held, the data holding section 2502 stores the settlement data in an FIFO (first-in, first-out) format. In other words, except for the settlement data at the head (firstly stored), the settlement data stored subsequent to the head becomes the settlement data waiting for approval.

The settlement processing section 2503 is an example of a settlement module. When an instruction to start settlement is received via the touch panel 2062, the settlement processing section 2503 executes the settlement processing based on the settlement data held in the storage area. Specifically, the settlement processing section 2503 executes the settlement processing for paying the amount of the commodity contained in the settlement data with cash, credit card, gift certificates, coupons or the like.

In the case of cash settlement, the settlement processing section 2503 calculates a change amount by subtracting the commodity total amount from the amount inserted into the money insertion slot 2041. Then, the settlement processing section 2503 returns the change amount calculated in the payment to the customer C2 by dispensing the change from the dispensing port 2043a. In the case of credit card settlement, the settlement processing section 2503 executes the settlement processing for paying the commodity total amount based on card information read via the card reader/writer 208. In the case of settlement with the gift certificate or the coupon, the settlement processing section 2503 executes the settlement processing for paying the commodity total amount based on the information relating to the gift certificate or the coupon input via the touch panel 2062. In the present embodiment, in the case of the settlement with the gift certificate or the coupon, it is assumed that the settlement processing is executed by the operation or assistance performed by the store clerk C1. Hereinafter, the settlement processing requiring the operation or assistance performed by the store clerk C1 is referred to as a special settlement.

Then, when the settlement processing is completed, the settlement processing section 2503 enables the printer 209 to print a receipt indicating contents of the transaction, i.e., results of the registration processing and the settlement processing, based on the settlement data and the contents of the settlement processing.

The operation state notification section 2504 notifies the operation state of the settlement apparatus 20 to each of the registration apparatuses 10. Specifically, the operation state notification section 2504 detects whether or not the settlement apparatus 20 thereof is executing the settlement processing, and notifies (transmits) state information indicating the detected result to each of the registration apparatuses 10. The operation state notification section 2504 also detects whether the settlement apparatus 20 thereof is operating in the store clerk registration mode or in the customer registration mode, and notifies state information indicating the detected result to each of the registration apparatuses 10. The timing at which the operation state notification section 2504 makes a notification is not particularly limited. For example, the operation state notification section 2504 may make the notification at a timing at which the operation state of the settlement apparatus 20 thereof changes. The operation state notification section 2504 may make a notification to the registration apparatus 10, i.e., state information request source, at a timing at which a request for state information is received from the registration apparatus 10.

The operation controller 2505 is an example of a second control module. The operation controller 2505 selectively switches the operation mode of the settlement apparatus 20 to enable the settlement apparatus 20 to operate in the switched operation mode. Specifically, the operation controller 2505 switches the operation mode of the settlement apparatus 20 between the store clerk settlement mode (store clerk operation mode) and the customer settlement mode (customer operation mode). The store clerk settlement mode is an operation mode in which the settlement processing on the commodity is performed by the operation of the store clerk C1. An operation method customized for operation by the store clerk C1 is set in association with the store clerk settlement mode. The customer settlement mode is an operation mode in which the settlement processing on the commodity is performed by the operation of the customer C2. An operation method customized for the operation by the customer C2 is set in association with the customer settlement mode.

The operation controller 2505 switches the operation mode from the store clerk settlement mode to the customer settlement mode if a sign-off operation indicating that the store clerk C1 leaves the settlement apparatus 20 is received. The operation controller 2505 switches the operation mode from the customer settlement mode to the store clerk settlement mode if a sign-on operation indicating that the store clerk C1 starts or resumes the operation of the settlement apparatus 20 is received. The operation methods for the sign-off operation and the sign-on operation are not particularly limited. For example, the operation controller 2505 determines that the sign-off operation is performed if the sign-off button displayed on the display 2061 is operated. If the identification information assigned in advance to the store clerk C1 is input via the fixed scanner 205, the operation controller 2505 determines that the sign-on operation is performed.

The settlement processing can be executed both in the store clerk settlement mode and in the customer settlement mode described above. However, similar to the registration apparatus 10, the store clerk C1 and the customer C2 are completely different in the level of proficiency in the operation of the settlement apparatus 20 and a position or a role in the retail store. Therefore, an operation and a function between the store clerk settlement mode and the customer settlement mode are different in terms of operability and security. The differences between the store clerk settlement mode and the customer settlement mode are described below.

First, the store clerk settlement mode and the customer settlement mode are different from each other in the operation method. Specifically, in the customer settlement mode, the operation controller 2505 controls the display 2061 to display an operation screen which can be operated more easily than that displayed in the store clerk settlement mode. For example, in the customer settlement mode, the operation controller 2505 displays an operation screen with a simplified screen configuration and an operation screen with enlarged operation buttons on the display 2061, as compared with the store clerk settlement mode. In the customer settlement mode, the operation controller 2505 displays an operation screen including guide information for guiding the operation method on the display 2061. The operation controller 2505 displays an operation screen including a call button for calling the store clerk C1 in the customer settlement mode. As a result, even when the customer C2 operates the settlement apparatus 20, the settlement apparatus 20 can be easily operated, efficiency of the settlement processing operated by the customer C2 can be improved.

In the customer settlement mode, the operation controller 2505 may not display an operation screen other than the operation screen relating to the settlement processing from the viewpoint of security.

On the other hand, in the store clerk settlement mode, the operation controller 2505 controls the display 2061 to display an operation screen that can perform high-level operations as compared with that in the customer settlement mode. In the store clerk settlement mode, the operation controller 2505 displays an operation screen including an operation button (sign-off button) for instructing sign-off processing on the display 2061. In the store clerk settlement mode, the operation controller 2505 can control the display 2061 to display an operation screen relating to a processing other than the settlement processing. For example, the operation controller 2505 displays a setting change screen for changing the setting of the settlement apparatus 20.

Contents executed in the settlement processing are different between the store clerk settlement mode and the customer settlement mode. Specifically, the operation controller 2505 controls the settlement processing section 2503 so as not to execute the special settlement that requires the operation or assistance by the store clerk C1 in a settlement with the gift certificate or the coupon in the customer settlement mode. The operation controller 2505 controls the settlement processing section 2503 to deal with various settlement methods including the special settlement in the store clerk settlement mode.

The difference between the store clerk settlement mode and the customer settlement mode is not limited to the above examples. For example, in a case in which the settlement apparatus 20 includes a weighing device for measuring the weight of the commodity and a weight check function, similarly to the registration apparatus 10, execution and non-execution of the weight check may be determined depending on the operation mode.

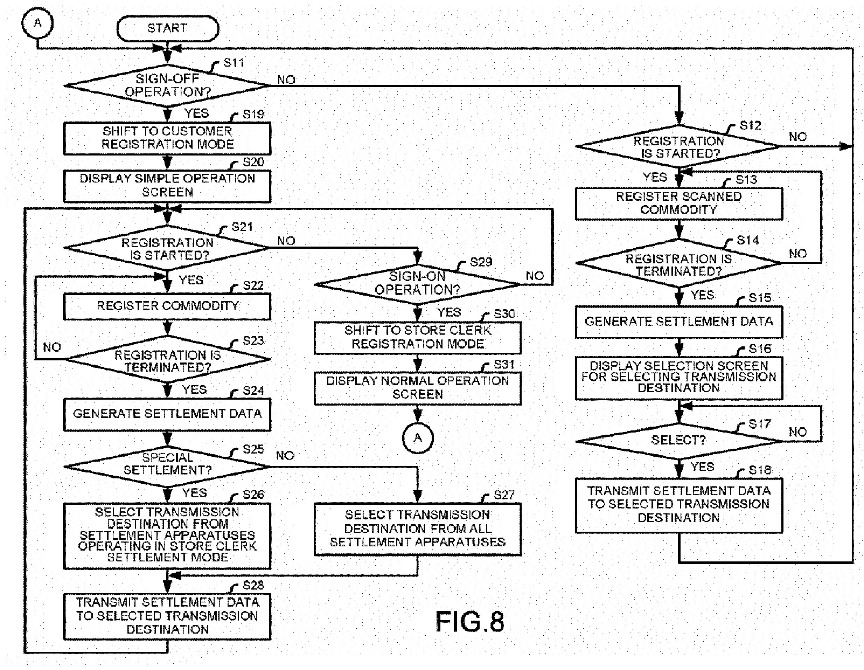

Next, the operation of the checkout system 1 is described. Fig. 8 is a flowchart depicting a processing performed by the registration apparatus 10. As a premise of the processing, the registration apparatus 10 is operating in the store clerk registration mode.

First, the operation controller 1505 determines whether or not the sign-off operation is performed (Act S11). The store clerk C1 performs the sign-off operation via the touch panel 103 or the keyboard 105 when he/she leaves the registration apparatus 10 for an another work.

If no sign-off operation is performed (No in Act S11), the registration processing section 1501 determines whether or not the start of registration is instructed via the touch panel 103 or the keyboard 105 (Act S12). If the start of registration is not instructed (No in Act S12), the registration processing section 1501 returns to the processing in Act S11. If the instruction for starting the registration is received (Yes in Act S12), the registration processing section 1501 proceeds to the processing in Act S13. In Act S13, the registration processing section 1501 performs the registration processing on the commodity purchased by the customer C2 based on the commodity identification information scanned by the scanner 101. Next, the registration processing section 1501 determines whether or not the termination of the registration is instructed via the touch panel 103 or the keyboard 105 (Act S14). If the termination of the registration is not instructed (No in Act S14), the registration processing section 1501 returns to the processing in Act S13.

If the termination of registration is instructed (Yes in Act S14), the settlement data generation section 1502 generates settlement data for one transaction based on the sales data of the commodity registered in Act S13 (Act S15).

Based on the state information acquired by the operation state acquisition section 1504, the operation controller 1505 controls the display 104 to display a selection screen for selecting one of the settlement apparatuses 20 as the settlement processing execution apparatus (transmission destination) (Act S16). Then, the operation controller 1505 stands by until one of the settlement apparatuses 20 is selected via the selection screen (No in Act S17). If one of the settlement apparatuses 20 is selected as the transmission destination (Yes in Act S17), the data transmission section 1503 transmits the settlement data to the selected settlement apparatus 20 (Act S18), and then returns to the processing in Act S11.

On the other hand, if the sign-off operation is received in Act S11 (Yes in Act S11), the operation controller 1505 switches the operation mode of the registration apparatus 10 to the customer registration mode (Act S19). The operation controller 1505 changes the operation screen displayed on the display 104 to a simpler operation screen (simple operation screen) (Act S20).

The registration processing section 1501 then determines whether or not the start of registration is instructed via the touch panel 103 or the keyboard 105 (Act S21). If the instruction for starting the registration is received (Yes in Act S21), the registration processing section 1501 proceeds to the processing in Act S22. In Act S22, the registration processing section 1501 registers the commodity purchased by the customer C2 based on the commodity identification information scanned by the scanner 101 (Act S22). Next, the registration processing section 1501 determines whether or not the termination of the registration is instructed via the touch panel 103 or the keyboard 105 (Act S23). If the termination of the registration is not instructed (No in Act S23), the registration processing section 1501 returns to the processing in Act S22.

If the termination of the registration is instructed (Yes in Act S23), the settlement data generation section 1502 generates settlement data for one transaction based on the sales data of the commodity registered in Act S22 (Act S24).

Next, the operation controller 1505 determines whether or not the special settlement is instructed as the settlement method (Act S25). If it is determined that the special settlement is instructed (Yes in Act S25), the operation controller 1505 selects or designates one settlement apparatus 20 as the settlement processing execution apparatus (transmission destination) from the settlement apparatuses 20 operating in the store clerk settlement mode based on the state information acquired by the operation state acquisition section 1504 (Act S26).

If it is determined that the special settlement is not instructed (No in Act S25), the operation controller 1505 selects one settlement apparatus 20 as the settlement processing execution apparatus (transmission destination) from all the settlement apparatuses 20 based on the state information acquired by the operation state acquisition section 1504 (Act S27). Although a method of selecting the settlement apparatus 20 is not particularly limited, it is preferable to preferentially select a settlement apparatus 20 which is not performing the settlement processing, or a settlement apparatus 20 having less waiting settlement jobs.

The data transmission section 1503 transmits the settlement data to the settlement apparatus 20 selected in Act S26 or Act S27 (Act S28), and then returns to the processing in Act S21.

In Act S21, if the instruction for starting the registration is not input (No in Act S21), the operation controller 1505 determines whether or not the sign-on operation is performed (Act S29). The store clerk C1 performs the sign-on operation via the touch panel 103, the keyboard 105 or the scanner 101 when the store clerk C1 returns to the registration apparatus 10 operated just before the store clerk C1 leaves to resume the registration or when the store clerk C1 comes to a new or another registration apparatus 10 to begin the registration.

If no sign-on operation is performed (No in Act S29), the registration processing section 150 1 returns to the processing in Act S21. If the sign-on operation is received (Yes in Act S29), the operation controller 1505 switches the operation mode of the registration apparatus 10 to the store clerk registration mode (Act S30). Then, the operation controller 1505 changes the operation screen displayed on the display 104 to an operation screen (normal operation screen) capable of performing a higher-level operation (Act S31), and then returns to the processing in Act S11.

As described above, if the registration apparatus 10 receives the sign-off operation in the store clerk registration mode, the registration apparatus 10 switches the operation mode thereof to the customer registration mode and thus the customer can operates the registration apparatus 10. If the registration apparatus 10 receives the sign-on operation in the customer registration mode, the registration apparatus 10 switches the operation mode thereof to the store clerk registration mode and thus the store clerk can operates the registration apparatus 10. As a result, the registration apparatus 10 can be operated in an operation mode suitable for the operator, and thus efficiency of the registration processing can be improved.

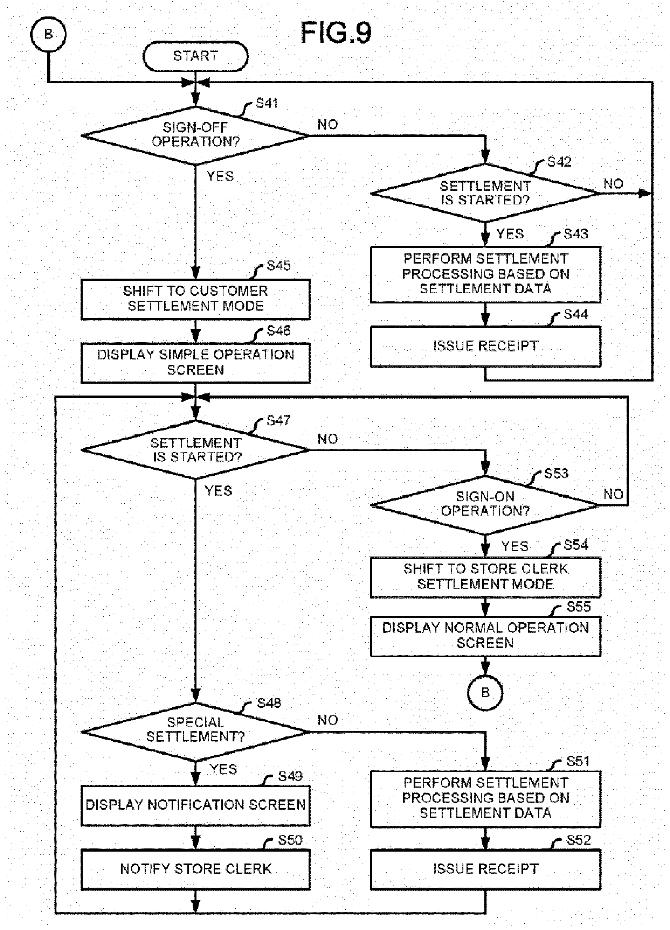

Fig. 9 is a flowchart depicting a processing executed by the settlement apparatus 20. As a premise of the processing, the settlement apparatus 20 is operating in the store clerk settlement mode. The settlement apparatus 20 already receives the settlement data transmitted from the registration apparatus 10.

First, the operation controller 2505 determines whether or not the sign-off operation is performed (Act S41). The store clerk C1 performs the sign-off operation via the display 2061 when he/she leaves the settlement apparatus 20 for some reason.

If no sign-off operation is performed (No in Act S41), the settlement processing section 2503 determines whether or not the start of settlement is instructed via the display-operation panel 206 (Act S42). If the start of the settlement is not instructed (No in Act S42), the settlement processing section 2503 returns to the processing in Act S41. If the settlement processing section 2503 receives the instruction to start the settlement (Yes in Act S42), the settlement processing section 2503 proceeds to the processing in Act S43. In Act S43, the settlement processing section 2503 performs the settlement processing on the commodity based on the settlement data held in a storage area (Act S43). In Act S43, the settlement processing can execute various settlement methods including the special settlement.

Then, the settlement processing section 2503 issues a receipt showing details of one transaction from the printer 209 based on a processing result in Act S43 (Act S44), and then returns to the processing in Act S41.

On the other hand, if the sign-off operation is received in Act S41 (Yes in Act S41), the operation controller 2505 switches the operation mode of the settlement apparatus 20 to the customer settlement mode (Act S45). The operation controller 2505 changes the operation screen displayed on the display 2061 to a simpler operation screen (Act S46). Then, the settlement processing section 2503 determines whether or not the start of the settlement is instructed via the display-operation panel 206 (Act S47). If the start of the settlement is instructed (Yes in Act S47), the settlement processing section 2503 determines whether or not the settlement method is the special settlement based on the settlement data held in the storage area (Act S48).

If it is determined that the settlement method is the special settlement (Yes in Act S48), the settlement processing section 2503 controls the display 2061 to display a notification screen for notifying that the operation or assistance by the store clerk C1 is necessary (Act S49). The settlement processing section 2503 transmits information indicating occurrence of the special settlement to the attendant terminal (not shown) to notify the store clerk C1 of the occurrence of the special settlement (Act S50), and then returns to the processing in Act S47. In this case, the store clerk C1 receiving the notification performs the sign-on operation on the settlement apparatus 20, i.e., notification source, to switch the operation mode of the settlement apparatus 20 to the store clerk settlement mode. Then, the settlement apparatus 20 performs the special settlement in response to the operation by the store clerk C1.

If it is determined that the settlement method is not the special settlement (No in Act S48), the settlement processing section 2503 performs the settlement processing on the commodity the customer C2 purchases based on the settlement data (Act S51). Then, the settlement processing section 2503 issues a receipt showing the details of one transaction with the printer 209 based on a processing result in Act S51 (Act S52), and then returns to the processing in Act S47.

In Act S47, if the start of the settlement is not instructed (No in Act S47), the operation controller 2505 determines whether or not the sign-on operation is performed (Act S53). If the store clerk C1 returns to the settlement apparatus 20 operated just before the store clerk C1 leaves to resume the operation or comes to a new or another settlement apparatus 20, the store clerk C1 performs the sign-on operation via the fixed scanner 205.

If no sign-on operation is performed (No in Act S53), the operation controller 2505 returns to the processing in Act S47. If the sign-on operation is received (Yes in Act S53), the operation controller 2505 switches the operation mode of the settlement apparatus 20 to the store clerk settlement mode (Act S54). Then, the operation controller 2505 changes the operation screen displayed on the display 2061 to a normal operation screen on which higher-level operations can be performed (Act S55), and then returns to the processing in Act S41.

In this way, if the settlement apparatus 20 receives the sign-off operation in the store clerk settlement mode, the settlement apparatus 20 changes the operation mode thereof to the customer settlement mode and thus the customer C2 can operate the settlement apparatus 20. If the settlement apparatus 20 receives the sign-on operation in the customer settlement mode, the settlement apparatus 20 changes the operation mode thereof to the store clerk settlement mode and thus the store clerk C1 can operate the settlement apparatus 20. As a result, the settlement apparatus 20 can be operated in an operation mode suitable for the operator, and thus the efficiency of the settlement processing can be improved.

As described above, the operation mode of each of the registration apparatus 10 and the settlement apparatus 20 is switched from the store clerk operation mode to the customer operation mode if the sign-off operation indicating the termination or halt of the operation by the store clerk C1 is received, or is switched from the customer operation mode to the store clerk operation mode if the sign-on operation indicating the start or resume of the operation by the store clerk C1 is received. Thus, in the checkout system 1, when the store clerk C1 leaves the registration apparatus 10 or the settlement apparatus 20, the operation mode of the corresponding apparatus is switched to the customer operation mode, and thus the corresponding apparatus can be operated by the customer C2. Therefore, even when an apparatus at which the store clerk C1 is not present comes into existence, the customer C2 can operate the corresponding apparatus by himself/herself, and thus a checkout efficiency of the entire system can be improved. In the operation mode for customer C2, a simplified operation screen is provided as compared with the operation mode for store clerk C1. The operability of the checkout system 1 for the customer C2 can be improved, and the efficiency of the registration processing and the settlement processing can be also improved.

In the operation mode for customer C2, the processing is executed with high security as compared with the operation mode for store clerk C1. In a case in which the customer C2 operates the registration apparatus 10 and the settlement apparatus 20, the settlement processing can be executed with high security, and thus the checkout system 1 can prevent unfair acts.

In the above embodiment, the registration apparatus 10 is a stationary type; however, it is not limited thereto, and the registration apparatus 10 may be formed in a movable type. For example, the registration apparatus 10 may be a portable device such as a smartphone or a tablet terminal. Further, for example, the registration apparatus 10 may be attached to a movable body such as a shopping cart.

In the above embodiment, the operation mode of the registration apparatus 10 or the settlement apparatus 20 is switched in response to the operation directly performed on the corresponding apparatus; however, an instruction for switching of the operation mode may be input from an external device. For example, the operation mode of the registration apparatus 10 or the settlement apparatus 20 may be switched according to instruction information transmitted from the attendant terminal located at a distance. While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the scope of the invention. The accompanying claims and their equivalents are intended to cover such forms or modifications as would fall within the scope of the invention.

## Claims

1. A checkout system comprising at least one registration apparatus and at least one settlement apparatus connected to a respective registration apparatus, wherein
each registration apparatus comprising
a registration module configured to execute a registration processing for registering a purchased commodity, and
a first control module configured to switch an operation mode of the registration apparatus from a store clerk operation mode in which the registration processing is performed by a store clerk to a customer operation mode in which the registration processing is performed by a customer, and vice versa, and
each settlement apparatus comprising
a settlement module configured to execute a settlement processing on the purchased commodity registered through the registration processing by the registration apparatus, and
a second control module configured to switch an operation mode of the settlement apparatus from a store clerk operation mode in which the settlement processing is performed by the store clerk to a customer operation mode in which the settlement processing is performed by the customer, and vice versa, wherein
the first control module and the second control module switch the operation mode from the store clerk operation mode to the customer operation mode if a sign-off operation of the store clerk is performed, and switch the operation mode from the customer operation mode to the store clerk operation mode if a sign-on operation of the store clerk is performed.

2. The checkout system according to claim 1, wherein
the first control module and the second control module are configured to provide a simpler operation method in the customer operation mode as compared with an operation method in the store clerk operation mode.

3. The checkout system according to claim 1 or 2, wherein
the registration apparatus further comprises a generation module configured to generate settlement data based on details of the purchased commodity registered by the registration module and a transmission module configured to transmit the settlement data generated by the generation module to the at least one of the settlement apparatuses serving as a transmission destination,
the first control module designates one of the at least one settlement apparatuses selected by the store clerk in the store clerk operation mode as the transmission destination, and designates one of the at least one settlement apparatuses in the customer operation mode as the transmission destination, and the transmission module transmits the settlement data to the settlement apparatus designated as the transmission destination by the first control module.

4. The checkout system according to any one of claims 1 to 3, wherein
the registration apparatus further comprises a generation module configured to generate settlement data based on details of the purchased commodity registered by the registration module and a transmission module configured to transmit the settlement data generated by the generation module to one of the at least one settlement apparatuses serving as a transmission destination,
the first control module designates one of the at least one settlement apparatuses selected by the store clerk in the store clerk operation mode as the transmission destination, and designates one of the at least one settlement apparatuses in the customer operation mode as the transmission destination, and the transmission module transmits the settlement data to the settlement apparatus designated as the transmission destination by the first control module.

5. The checkout system according to claim 3, wherein
the first control module designates one settlement apparatus operating in the store clerk operation mode selected by the store clerk if a settlement method requiring an operation or assistance performed by the store clerk is designated in the store clerk operation mode.

6. The checkout system according to claim 3, wherein
the first control module designates one of the settlement apparatuses operating in the store clerk operation mode selected by the store clerk if the settlement method requiring an operation or assistance performed by the store clerk is designated in the customer operation mode.

7. The checkout system according to any one of claims 1 to 6, comprising
at least two registration apparatuses and at least two settlement apparatuses, each settlement apparatus connected to a respective registration apparatus.

8. The checkout system according to any one of claims 1 to 6, comprising
at least three registration apparatuses and at least three settlement apparatuses, each settlement apparatus connected to a respective registration apparatus.

9. The checkout system according to any one of claims 1 to 8, wherein
the system comprises a same number of registration apparatuses as settlement apparatuses.

10. The checkout system according to any one of claims 1 to 9, further comprising:
a printer configured to print a receipt upon completion of settlement processing.

11. A checkout method for a checkout system comprising at least one registration apparatus and at least one settlement apparatus connected to a respective registration apparatus, the method comprising:
executing a registration processing for registering a purchased commodity;
switching an operation mode of the registration apparatus from a store clerk operation mode in which the registration processing is performed by a store clerk to a customer operation mode in which the registration processing is performed by a customer, and optionally vice versa;
executing a settlement processing on the purchased commodity registered through the registration processing by the registration apparatus;
switching an operation mode of the settlement apparatus from a store clerk operation mode in which the settlement processing is performed by the store clerk to a customer operation mode in which the settlement processing is performed by the customer, and optionally vice versa,
wherein switching the operation mode from the store clerk operation mode to the customer operation mode is executed when a sign-off operation of the store clerk is performed, and switching the operation mode from the customer operation mode to the store clerk operation mode is executed when a sign-on operation of the store clerk is performed.

12. The checkout method according to claim 11, wherein
registration processing and settlement processing are a simpler operation method in the customer operation mode as compared with an operation method in the store clerk operation mode.

13. The checkout method according to claim 11 or 12, further comprising:
generating settlement data based on details of the purchased commodity registered and transmitting the settlement data generated to the at least one of the settlement apparatuses serving as a transmission destination,
designating one of the at least one settlement apparatuses selected by the store clerk in the store clerk operation mode as the transmission destination,
designating one of the at least one settlement apparatuses in the customer operation mode as the transmission destination, and
transmitting the settlement data to the settlement apparatus designated as the transmission destination.

14. The checkout method according to any one of claims 11 to 13, further comprising:
generating settlement data based on details of the purchased commodity registered and transmitting the settlement data generated to one of the at least one settlement apparatuses serving as a transmission destination,
designating one of the at least one settlement apparatuses selected by the store clerk in the store clerk operation mode as the transmission destination,
designating one of the at least one settlement apparatuses in the customer operation mode as the transmission destination, and
transmitting the settlement data to the settlement apparatus designated as the transmission destination.

15. A non-transitory computer readable medium storing a program causing a computer to execute the method according to any one of claims 11 to 14.
